# EUROPEAN PATENT SPECIFICATION

(11) **EP 1 990 524 B1**
(45) Date of publication and mention of the grant of the patent: **08.07.2009**
(21) Application number: 07009547.6
(22) Date of filing: 11.05.2007
(51) Int. Cl.: F02D 41/14, F02P 5/152

(54) **System for controlling the torque output of an SI engine**
System zur Steuerung der Drehmomentleistung eines Benzinmotors
Système de contrôle de sortie de couple d'un moteur

(43) Date of publication of application: 12.11.2008
(73) Proprietor: Ford Global Technologies, LLC, Dearborn, MI 48126 (US)
(72) Inventor: Olsson, Jan-Ola, 418 73 Göteborg (SE); Englander, Hans, 437 33 Lindome (SE)
(74) Representative: Valea AB

(56) References cited:
- EP-A1- 1 296 058
- GB-A- 2 169 957
- JP-A- 62 075 072

## Description

### TECHNICAL FIELD

The present invention is related to a system for controlling torque output of a spark-ignited internal combustion engine in accordance with the preamble of claim 1.

### BACKGROUND OF THE INVENTION

When running internal combustion engines on low octane rated fuel or at high ambient temperature spark retard due to knock will usually be required. A turbo charged engine usually has the capability to compensate retarded spark with more air, keeping the torque constant. This is sufficient for moderate levels of knock/spark retard, however, when knock causes very high spark retard, compensation with more air leads to unacceptable spark timing, causing partial burns or complete misfires that is perceived by the driver as jerks. At extreme conditions spark retard will saturate, leading to uncontrolled knock and engine damage. Also a naturally aspirated engine could suffer from similar problems, however, usually less pronounced.

A problem is to limit the torque in order to prevent jerks from partial burns or misfires, without introducing new problems, such as torque dips or low utilization of the engine capacity over the speed range.

Some previous attempts to address the above problems have been based on the concept of a reducing factor that is integrated from one towards a lower value when ignition efficiency is too low. This solution suffers from torque overshoot at tip in (load increase at constant engine speed), before the integrator has settled, and inability to utilize a higher available torque at higher engine speed. Typically a Spark-Ignited engine (SI engine) can tolerate higher torque at higher engine speeds for the same level of knock.

Since the above described solution has no tracking to rapidly get into control it requires a calibration that is rather fast, this increases the risk of randomly fluctuating torque due to signal noise.

### SUMMARY OF THE INVENTION

An object of the present invention is to provide an improved system for controlling torque output of a spark-ignited internal combustion engine that may eliminate or at least reduce the problems described above.

According to a first aspect of the present invention this object is achieved in accordance with claim 1, which specifies a system for controlling torque output of a spark-ignited internal combustion engine providing torque limitation for the SI engine at conditions prone to knock such that hardware damage or partial burns at late ignition is prevented, without introducing new problems, such as torque dips or low utilization of the engine capacity over the speed range, thus guarantying a pleasant experience during acceleration.

Further embodiments are listed in the dependent claims.

It will be appreciated that features of the invention are susceptible to being combined in any combination without departing from the scope of the invention as defined by the accompany claims.

### BRIEF DESCRIPTION OF THE DRAWINGS

By way of example only, embodiments of the present invention will now be described with reference to the accompanying drawings wherein:

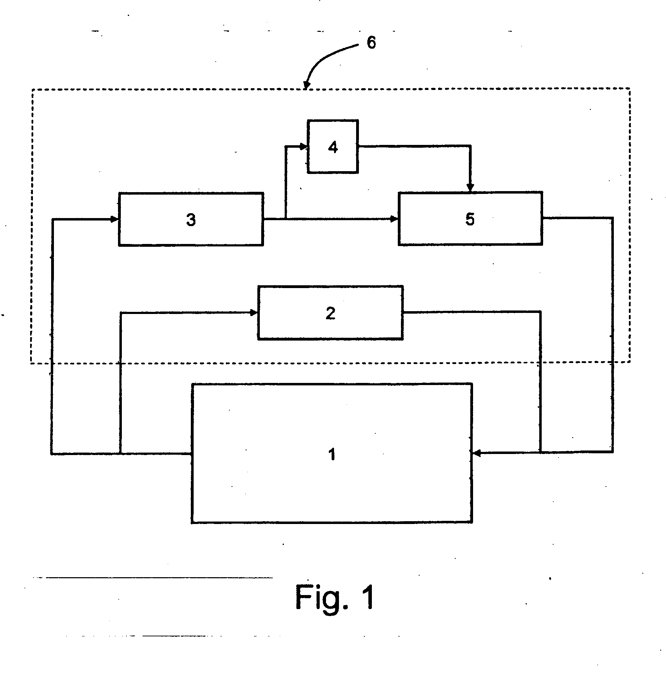

- Figure 1: schematically illustrates a first embodiment of the present invention.

Still other objects and features of the present invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not necessarily drawn to scale and that, unless otherwise indicated, they are merely intended to conceptually illustrate the structures and procedures described herein. The same reference numerals will be used for illustrating corresponding features in the different drawings.

### DETAILED DESCRIPTION OF PREFERRED EMBODIMENTS

The present invention relates to a system for controlling torque output of a spark-ignited internal combustion engine. It especially addresses the problem of limiting the torque in order to prevent jerks from partial burns or misfires, without introducing new problems, such as torque dips or low utilization of the engine capacity over the speed range.

The invention is based on the realisation that a fast controller will eliminate the too low spark timings efficiently and utilize the torque capacity over the engine speed, but the fast controller will alter the allowed torque rapidly causing unpleasant torque dips.

Furthermore, a slow controller will either not eliminate the late spark timings or will lower the torque too much in the entire speed range. Especially tip in (a load increase at constant engine speed, e.g. the first portion of a vehicle's acceleration in which engine torque changes occur much faster than engine speed changes), from a moderated engine speed is critical, as boost and torque builds up, spark retard due to knock starts to increase.

A useful controller will have to limit the torque at the correct value without causing the torque to drop, since this will be felt by the driver.

The system to be controlled contains dynamics in different places. The calculated maximum torque is fed into a torque controller structure within the Engine Management System (EMS) that itself contains some, comparably fast, dynamics to achieve the desired air and fuel. The Engine Management System (EMS), also known as an Engine Control Unit (ECU), is an electronic system which controls various aspects of an internal combustion engine's operation.

The engine itself has rather complicated dynamics for knocking, both fast and slow. The knock measurement system uses very fast sensors, but due to the typically rather low signal to noise ratio some low pass filtering of the knock estimate is usually required. The knock controller itself within the EMS is also dynamic.

In a first embodiment of the present invention, as schematically illustrated by FIG. 1, is shown a spark-ignited internal combustion engine 1 (SI engine). The SI engine has an associated knock-measurement and knock-control part 2, which controls spark timing. A knock-control part 2 output is provided as an input to a torque model part 3, which is arranged to output ignition efficiency to a torque control part 5, which controls the air/fuel of the SI engine 1.

In order to reduce torque and avoid extreme spark retard and non-acceptable torque fluctuations at conditions challenging for knock control the system in accordance with the present invention comprises a Proportional-Integral-controller (PI-controller) 4 arranged to operate with the output of the torque model 3, that is the ignition efficiency, i.e. engine torque at current spark retard, compared to torque at minimum spark advance for best torque (i.e. torque at MBT spark) as input and output, to the torque control part 5 of an Engine Control Unit 6, maximum allowed torque with respect to knock.

A PI-controller is a common component in control systems. The controller takes a measured value from a process or other apparatus and compares it with a reference set point value. The difference (or "error" signal) is then used to adjust some input to the process in order to bring the process' measured value to its desired set point. The PI control scheme is named after its two correcting terms, whose sum constitutes the output.

The Proportional -part of the controller 4 is tabulated against controller error, i.e. it is nonlinear. Most commonly used controllers start from zero, which not very appropriate for a controller limiting the torque. The base for this controller 4 has to be a high torque, not limiting engine performance at normal operation. However, rather than using a fixed base torque or the maximum torque in an associated pedal map, in a preferred embodiment a table of torque versus engine speed is used that is calibrated for this function only. In that way the shape of the torque, versus engine speed, may be calibrated to fit the knocking characteristics of the engine 1.

For improved driveability this torque should preferably be equal to, or above, the maximum torque in the pedal map for all engine speeds.

Thus, control action of the controller 4 is referenced against a table of torque versus engine speed in which the shape of the torque versus engine speed has been calibrated to fit the knocking characteristics of the engine 1.

In one embodiment the torque in this table is equal to, or above, the maximum torque in an associated pedal map for all engine speeds.

In an alternative embodiment, the Integral-terms are initialized to a non-zero value, such that the output, maximum allowed torque with respect to knock, do not fall below the maximum torque in an associated pedal map, once the system has been initialized, i.e. such that the controller 4 does not restrict the torque immediately following engine start, but only once a need for restriction has been established.

The Integral-part of the controller 4 is arranged such that the controller 4 very quickly limits the torque if spark retard exceeds an allowed limit, in order to avoid overshooting an allowable torque. This is solved by a tracking function that very quickly lowers the output, maximum allowed torque with respect to knock, through use of at least one of a very short time constant or a gain to rapidly adapt the Integral-part of the controller 4 when the spark retard limit is exceeded and the controller 4 is not limiting the torque. This adaptation of the Integral-part of the controller 4 may consist of an increase or decrease of the Integral-part of the controller 4 depending on the configuration of the controller 4. In this way the Integral-part of the controller 4 takes a large step in a very short time to put the function in control as soon as the spark retard limit is exceeded.

For a given Integral-part the torque limit output from the controller 4 will follow the shape of the tabulated base torque, which is calibrated to fit the knock characteristics of the engine 1. However, different conditions will result in a somewhat different shape of the acceptable torque versus engine speed. To accommodate this, the Integral-part of the controller 4 is divided into a plurality of individual parts, which are arranged to be active in different engine speed areas. In one embodiment the Integral-part of the controller 4 is divided Into three individual parts, which are arranged to be active in different engine speed areas.

While operating the vehicle at high load, the shape of the allowed torque, torque versus engine speed, may be optimized for current conditions. In order to avoid steps in the output torque, interpolation is used between node speeds of the individual Integral-parts of the controller 4.

Thus is provided torque limitation for the SI engine at conditions prone to knock such that hardware damage or partial burns at late ignition is prevented, thus guarantying a pleasant experience during acceleration of an associated vehicle.

In accordance with the present invention is also envisaged an Engine Control Unit 6, which comprises a system as described above.

Furthermore, in accordance with the present invention is also envisaged an automotive vehicle, which comprises such an Engine Control Unit 6.

Still further, in accordance with the present invention is also envisaged an automotive vehicle, which comprises a system as described above.

Modifications to embodiments of the invention described in the foregoing are possible without departing from the scope of the invention as defined by the accompanying claims.

Expressions such as "including", "comprising", "incorporating", "consisting of", "have", "is" used to describe and claim the present invention are intended to be construed in a non-exclusive manner, namely allowing for items, components or elements not explicitly described also to be present. Reference to the singular is also to be construed to relate to the plural and vice versa.

Numerals included within parentheses in the accompanying claims are intended to assist understanding of the claims and should not be construed in any way to limit subject matter claimed by these claims.

Thus, while there have been shown and described and pointed out fundamental novel features of the invention as applied to a preferred embodiment thereof, it will be understood that various omissions and substitutions and changes in the form and details of the devices illustrated, and in their operation, may be made by those skilled in the art. For example, it is expressly intended that all combinations of those elements and/or method steps which perform substantially the same function in substantially the same way to achieve the same results are within the scope of the invention. Moreover, it should be recognized that structures and/or elements and/or method steps shown and/or described in connection with any disclosed form or embodiment of the invention may be incorporated in any other disclosed or described or suggested form or embodiment as a general matter of design choice. It is the intention, therefore, to be limited only as indicated by the scope of the claims appended hereto.

## Claims

1. System for controlling torque output of a spark-ignited internal combustion engine (1) having an associated knock-measurement and knock-control part (2), which controls spark timing, the output of which knock-control part (2) is provided as an input to a torque model part (3) which is arranged to output ignition efficiency, i.e. engine torque at current spark retard compared to torque at minimum spark advance for best torque, to a torque control part (5), which controls the air/fuel of the spark ignited internal combustion engine (1), the system further comprising a Proportional-Integral-controller (4) arranged to operate with the output of the torque model part (3), that is the ignition efficiency, as input, and output maximum allowed torque with respect to knock, to the torque control part (5) of an Engine Control Unit (6), **characterised in that** control action of the controller (4) is referenced against a table of torque versus engine speed, in which the shape of the torque versus engine speed has been calibrated to fit the knocking characteristics of the engine (1).

2. System according to claim 1, **characterised in that** in the table the torque is equal to, or above, the maximum torque in an associated pedal map for all engine speeds.

3. System according to claim 1, **characterised in that** Integral-terms are initialized to a non-zero value, such that the output, maximum allowed torque with respect to knock, do not fall below the maximum torque in an associated pedal map, once the system has been initialized.

4. System according to any one of claims 2 or 3, **characterised in that** a tracking function is provided that very quickly lowers the output, maximum allowed torque with respect to knock, through use of at least one of a very short time constant or a gain to rapidly adapt the Integral-part of the controller (4) when a spark retard limit is exceeded and the controller is not limiting the torque.

5. System according to claim 4, **characterised in that** the Integral-part of the controller (4) is divided into a plurality of individual parts, which are arranged to be active in different engine speed areas.

6. System according to claim 5, **characterised in that** the Integral-part of the controller (4) is divided into three individual parts.

7. System according to any one of claims 5 or 6, **characterised in that** to avoid steps in the output torque, interpolation is used between node speeds of the individual Integral-parts of the controller (4).

8. An Engine Control Unit (6) **characterised in that** it comprises a system according to any one of the preceding claims.

9. An automotive vehicle **characterised in that** it comprises an Engine Control Unit (6) according to claim 8.

10. An automotive vehicle **characterised in that** it comprises a system according to any one of claims 1 to 7.

## Patentansprüche

1. System zur Steuerung der Drehmomentabgabe eines Ottomotors (1) mit einem zugeordneten Bereich (2) zur Klopfmessung und -steuerung, der den Zeitpunkt des Zündfunkens steuert, wobei der Ausgangswert dieses Bereichs (2) zur Klopfsteuerung als Eingangswert für einen Drehmomentmodell-Bereich (3) verwendet wird, der so ausgelegt ist, dass er einen Zündungswirkungsgrad, d. h. das Drehmoment des Motors bei einer momentanen Verzögerung des Zündzeitpunkts im Vergleich zum Drehmoment bei kleinstmöglicher Frühzündung für das beste Drehmoment, an einen Bereich (5) zur Steuerung des Drehmoments ausgibt, der die Luft und/oder den Kraftstoff des Ottomotors (1) steuert, wobei das System weiter einen Proportional-Integral-Regler (4) umfasst, der so eingerichtet ist, dass er mit dem Ausgangswert des Drehmomentmodell-Bereichs (3), also dem Zündwirkungsgrad, als Eingangswert arbeitet, und das maximale zulässige Drehmoment in Hinblick auf Klopfen an den Bereich (5) zur Steuerung des Drehmoments eines Motorsteuergeräts (6) ausgibt, **dadurch gekennzeichnet, dass** die Regeltätigkeit des Reglers (4) mit einer Tabelle Drehmoment über Motordrehzahl verglichen wird, in der die Form von Drehmoment über Motordrehzahl so kalibriert ist, dass sie zu den Klopfeigenschaften des Motors (1) passt.

2. System nach Anspruch 1, **dadurch gekennzeichnet, dass** in der Tabelle das Drehmoment gleich oder größer ist als das Drehmoment in einem zugeordneten Pedalkennfeld für alle Motordrehzahlen.

3. System nach Anspruch 1, **dadurch gekennzeichnet, dass** Integralterme auf einen Wert ungleich Null initialisiert werden, so dass der Ausgangswert, das maximal zulässige Drehmoment in Hinblick auf Klopfen, nicht unter das maximale Drehmoment in einem zugeordneten Pedalkennfeld fällt, nachdem das System initialisiert worden ist.

4. System nach einem der Ansprüche 2 oder 3, **dadurch gekennzeichnet, dass** eine Nachverfolgungsfunktion vorgesehen ist, die den Ausgangswert, das maximal zulässige Drehmoment in Hinblick auf Klopfen, sehr schnell absenkt, indem sie durch die Verwendung von mindestens einer sehr kurzen Zeitkonstante und/oder einer Verstärkung den Integralteil des Reglers (4) schnell anpasst, wenn eine Grenze der Zündverzögerung überschritten ist und der Regler das Drehmoment nicht begrenzt.

5. System nach Anspruch 4, **dadurch gekennzeichnet, dass** der Integralteil des Reglers (4) in eine Mehrzahl von einzelnen Teilen aufgeteilt ist, die so eingerichtet sind, dass sie in unterschiedlichen Bereichen der Motordrehzahl aktiv sind.

6. System nach Anspruch 5, **dadurch gekennzeichnet, dass** der Integralteil des Reglers (4) in drei einzelne Teile aufgeteilt ist.

7. System nach einem der Ansprüche 5 oder 6, **dadurch gekennzeichnet, dass** zum Vermeiden von Stufen im Ausgangsdrehmoment Interpolation zwischen Knotendrehzahlen der einzelnen Integralteile des Reglers (4) eingesetzt wird.

8. Motorsteuergerät (6), **dadurch gekennzeichnet, dass** es ein System gemäß einem der vorangehenden Ansprüche umfasst.

9. Automobil, **dadurch gekennzeichnet, dass** es ein Motorsteuergerät (6) nach Anspruch 8 umfasst.

10. Automobil, **dadurch gekennzeichnet, dass** es ein System nach einem der Ansprüche 1 bis 7 umfasst.

## Revendications

1. Système de contrôle du couple de sortie d'un moteur (1) à combustion interne à allumage par étincelle ayant un organe associé (2) de mesure du cliquetis et de contrôle du cliquetis qui contrôle le calage de l'allumage, la sortie de cet organe (2) de contrôle du cliquetis étant fournie comme entrée à un organe (3) de modèle de couple qui est prévu pour envoyer un rendement d'allumage, c'est-à-dire un couple du moteur au retard d'allumage courant comparé au couple à l'avance minimale à l'allumage pour le meilleur couple, à un organe (5) de contrôle de couple (5) qui contrôle le rapport air/carburant du moteur (1) à combustion interne à allumage par étincelle, le système comprenant en outre un régulateur Proportionnel - Intégral (4) prévu pour opérer avec la sortie de l'organe (3) de modèle de couple, qui est le rendement d'allumage, comme entrée, et un couple de sortie maximal autorisé par rapport au cliquetis, à l'organe (5) de commande de couple d'une Unité de Contrôle Moteur (6), ***caractérisé en ce que*** l'action de contrôle du contrôleur (4) est comparée à une table couple/vitesse moteur dans laquelle la forme de la courbe couple/vitesse moteur a été ajustée pour correspondre aux caractéristiques de cliquetis du moteur (1).

2. Système selon la revendication 1, ***caractérisé en ce que,*** dans la table, le couple est égal ou supérieur au couple maximal dans un mappage des pédales pour toutes les vitesses moteur.

3. Système selon la revendication 1, ***caractérisé en ce que*** des termes Intégral sont initialisés à une valeur non nulle, de telle sorte que le couple de sortie maximal autorisé par rapport au cliquetis ne chute pas au-dessous du couple maximal dans un mappage des pédales associé, une fois que le système a été initialisé.

4. Système selon l'une quelconque des revendications 2 ou 3, ***caractérisé en ce qu*'**une fonction de poursuite est prévue, qui abaisse très rapidement le couple de sortie maximum autorisé par rapport au cliquetis, par l'utilisation d'au moins l'un d'entre une constante de temps très brève ou un gain, pour adapter rapidement la partie Intégral du contrôleur (4) lorsqu'une limite de retard à l'allumage est dépassée et que le contrôleur ne limite pas le couple.

5. Système selon la revendication 4, ***caractérisé en ce que*** la partie Intégral du contrôleur (4) est divisée en une pluralité de parties individuelles, qui sont prévues pour être actives dans différentes zones de vitesse du moteur.

6. Système selon la revendication 5, ***caractérisé en ce que*** la partie Intégral du contrôleur (4) est divisée en trois parties individuelles.

7. Système selon l'une quelconque des revendications 5 ou 6, ***caractérisé en ce que,*** pour éviter des échelons du couple de sortie, une interpolation est utilisée entre des vitesses nodales des parties Integral individuelles du contrôleur (4).

8. Unité de Contrôle Moteur (6), ***caractérisée en ce qu*'**elle comprend un système se-Ion l'une quelconque des revendications précédentes.

9. Véhicule automobile ***caractérisé en ce qu*'**il comprend une Unité de Contrôle Moteur (6) selon la revendication 8.

10. Véhicule automobile ***caractérisé en ce qu*'**il comprend un système selon l'une quelconque des revendications 1 à 7.
